# EUROPEAN PATENT APPLICATION

(11) **EP 4 711 343 A1**
(43) Date of publication of application: **18.03.2026**
(21) Application number: 24200392.9
(22) Date of filing: 13.09.2024
(51) Int. Cl.: C02F 3/26, C02F 3/30

(54) **USE OF PURE OXYGEN TO ACHIEVE AEROBIC CONDITIONS FASTER FOR PREVENTION OF N2O PRODUCTION IN WASTEWATER TREATMENT**

(71) Applicant: L'AIR LIQUIDE, SOCIETE ANONYME POUR L'ETUDE ET L'EXPLOITATION DES PROCEDES GEORGES CLAUDE, 75007 Paris (FR); Air Liquide Gas AB/ Gas Markets, 212 09 Malmö (SE); Air Liquide Belge SA, 1130 Bruxelles (BE)
(72) Inventor: Boussemaere, Roel, 1130 BRUSSELS (BE); Alexandersson, John Tomas, 215 37 Malmö (SE); Lamond, Rudy, 1130 BRUSSELS (BE); Parravicini, Giulia, 1130 BRUSSELS (BE); MARION, Sébastien, 215 37 Malmö (SE)
(74) Representative: Air Liquide

(57) **Abstract**

A process for treating water in a treatment plant, in which a biodegradable material present in the water is biodegraded at least partly by microorganisms, and in which the nitrogen contained in the water is biologically treated by successive stages of nitrification and denitrification, the nitrification step being favored in an aerobic environment, whereas denitrification is favoured by anoxic conditions,
characterized in that :
- an injection of pure oxygen or of a gas mixture comprising oxygen, gas mixture comprising preferentially at least 90% oxygen, is performed into a first part of the nitrification zone, which is a first aerated zone following an anoxic zone, first aerated zone where the concentration of pollutant is considered as the highest towards a given set point value, first part into which a change from anoxic to aerobic conditions is achieved, said injection being performed in order to allow preventing the incomplete oxidation of the nitrogen species coming from the denitrification zone, and therefore decreasing the Nitrous Oxides production, such conditions of oxygen being able to create oxic conditions,
- while it is performed an aeration of the rest of said first aerated zone zone with compressed air or with any other oxygen-containing mixture including pure oxygen.

## Description

The present invention relates to the field of wastewater treatment plants, which in the majority of cases implement activated sludge treatment. The nitrogen contained in wastewaters is currently biologically treated by successive stages of nitrification and denitrification. These two biological stages generate gaseous compounds, including molecular nitrogen, and nitrogen oxides, in particular nitrous oxide (N₂O), which is considered negatively as being a greenhouse gas.

One could also mention the existence of non-conventional systems like the SHARON processes (SHARON being an abbreviation for Stable reactor system for High Ammonia Removal Over Nitrite), but also the ANAMMOX type of nitrogen treatment systems (ANAMMOX being an abbreviation for "Anaerobic Ammonium Oxidation), wherein Anammox is using a special type of bacteria, and wherein in the Anammox reaction, nitrite and ammonium ions n are converted directly into diatomic nitrogen and water.

Let's remind also that the nitrification step involves the biological oxidation of ammonium (NH₄⁺ ) into nitrite (NO₂⁻ ) and as the case may be to nitrate (NO₃⁻ ).

This reaction is favored in an aerobic environment, and its N₂O yield is normally low, as this gas is a co-product of the reaction and is mainly produced under biological stress conditions. Oxygen is generally injected into the lower part of the tank by means of a compressed air injection, using an aeration system such as those well known to those skilled in this art.

Denitrification is a respiratory process during which soluble forms of nitrogen (nitrate NO₃ ⁻ , nitrite NO₂ ⁻ ) are reduced to gaseous compounds, notably into gaseous nitrogen N₂. Denitrification is favoured by anoxic conditions, and increases with nitrate content. The yield of N₂O is high, as this gas is an intermediate product of the transformation process. When transformation is complete, it leads to the formation of nitrogen N₂, which is released to the atmosphere in gas phase, thus eliminating soluble forms of nitrogen without transferring pollution. On the other hand, if the denitrification process is incomplete, N₂O can be released / stripped / emitted to the atmosphere.

Going more into details, one of the major components of wastewater, both municipal and industrial, is nitrogen, which usually is bound in chemical compounds and referred to as either organic or inorganic nitrogen. It is important to reduce the concentration of this element in the wastewater before reaching the recipient as it causes eutrophication in the environment. The overall aim of a biological wastewater treatment plant is to lower the concentration of nitrogen by transforming organic nitrogen into nitrogen gas, which is released into the atmosphere. This is commonly done by mixing the incoming wastewater with activated sludge, which consists of bacteria and microorganisms. The transformation process involves different types of bacteria and they require two different operating conditions, usually described as "aerobic" and "anoxic", both terms reflecting the availability of oxygen.

Oxygen is added in the aerobic part, usually by injection of compressed air in the bottom of the tank with a special aeration system. The air will also stir the contents in the plant. Oxygen from air is not actively added in the anoxic part and therefore submerged stirrers are usually needed to mix the water.

Organic nitrogen is converted to inorganic nitrogen through hydrolysis and degradation of organic material. This process occurs both in the aerobic and anoxic parts of the treatment plant. The sequential steps to convert inorganic nitrogen gas starts with ammonium, which is oxidized to nitrate in the aerobic part. This is done in a multi-step process, with two main processes, involving two different types of bacteria normally referred to as ammonium oxidizing bacteria and nitrite oxidizing bacteria.

First, ammonium oxidizing bacteria oxidizes ammonium into nitrite and this is then oxidized further into nitrate by nitrite oxidizing bacteria.

Both of these reactions demand aerobic conditions.

Nitrate is then reduced into nitrogen gas together with the consumption of organic carbonaceous material in the anoxic part referred to as "denitrification". The sequential treatment can practically be arranged in either pre-denitrification before the aerobic part where organic material in the wastewater is used or post-denitrification, which is placed after the aerobic process. It is necessary to have an internal recirculation with a pre-denitrification in order to supply nitrate produced in the aerobic part to the anoxic step. This recirculation is not needed in a post-denitrification but instead there is a need for an external carbon source as the organic matter has been already degraded in the aerobic part.

The conditions in the denitrification zone is such that only heterotrophic bacteria are participating in the nitrogen removal process converting nitrate into nitrogen gas.

To summarize, the aerobic digestion of wastewater refers to the biological process which breaks down the organic matter present in the wastewater into simpler compounds in presence of oxygen. In this framework, the injection of oxygen instead of air in specific parts of the aerated stages of the biological process would avoid the formation of anoxic conditions and the evolution of undesirable byproducts (N2O) which could interfere with the complete nitrification of the organic matter and would play a fundamental role in the greenhouse emissions in the wastewater chain.

Majority of the nitrous oxides emissions at a wastewater treatment plant occur in the aerated stages present in active sludge treating systems (more than 90%). The rest of these N₂O emissions can occur in grit tanks, pre-sedimentation tanks, secondary clarifiers, sludge storage tanks and anaerobic sludge digesters. Relevant parameters which can be monitored nowadays to take actions in order to prevent N2O emissions are: the sludge hydraulic retention time, rapid changes in environmental conditions (i.e. ammonia shock loads, oxygen limiting conditions and changes in nitrite concentration), pH variations and temperature fluctuations . An additional factor not always cited is the salinity, which influences the solubility of the gas in the liquid and the enzyme activity, furthermore incrementing the conversion of Nitrous Oxides and their stripping in air. Nevertheless, the control of dissolved oxygen (DO) represents a key factor in monitoring and preventing N₂O discharge in the atmosphere, due to the significant impact of DO levels on the performance of heterotrophic and autotrophic microorganisms in the activated sludge.

As it is well known, Nitrous oxide (N₂O) is a potent greenhouse gas reported to contribute the 26% to the total greenhouse gas emission (CO₂, CH₄ and N₂O) of the total water chain in a wastewater treatment plant due to its strong harmful effect which significantly contributes to the greenhouse gas footprint in wastewater treatment. In addition, in bio oxidation processes where the nitrification zone and the denitrification zone are separated or segmented, the area at the entrance of the aerobic zone where the biodegradable substrate is transported from the anoxic condition (denitrification zone) to the aerobic condition (nitrification zone), the oxygen supplied to the system is almost immediately consumed due to the high presence of oxidizable species. Because of this phenomenon, due to the absence of complete aerobic conditions there, autotrophic bacterias are producing nitrous oxides.

One could keep in mind that also other types of bacteria could produce N₂O. If not properly aerated, heterotrophic bacteria could continue with denitrification, which can lead to N₂O formation.

The supply of pure Oxygen at the beginning of the nitrification or end of denitrification zone or swing zone enables one to go quicker to aerobic conditions which allow faster ammonia and biodegradable substrate consumption, therefore avoiding the incomplete oxidation and formation of N2O gasses which play a fundamental role in the field of greenhouse gasses emissions.

This reduces the spatial distribution of low oxygen zones which are prone to produce N2O in sub-optimal conditions where nitrification and denitrification take place in the same zone and time distribution.

In this context, pure oxygen will help to achieve aerobic conditions faster due to its high oxygen transfer in that specific zone.

If we talk here above of "beginning of the nitrification zone", or of "end of denitrification zone", it will appear clearly to the skilled man that the word nitrification refers to the biological oxidation, and so one could also or even rather use the wording "first aerobic (or aerated) zone that follows directly after the anoxic zone".

Conventional sludge processes pertain to treatment methods commonly used for the management of wastewater, whose aim is to reduce the volume and the organic content in order to provide an environmentally safe and stable sludge disposal through its digestion. Nitrogen, generally present in wastewater in reduced form as ammonium, is removed during conventional wastewater treatment by two sequential biological processes: nitrification and denitrification. During nitrification, ammonia (NH₄⁺) is transformed into nitrite (NO₂⁻) and/or in a second stage to nitrate (NO₃). The oxygen diffuses from the bulk liquid into floc particles and is needed in order to accomplish the required water quality, nitrogen removal and water reuse. At higher organic loading rates, there is a greater substrate concentration in the mixed liquor, which causes a higher oxygen consumption rate within the floc. Therefore, a higher oxygen transfer to the bulk liquid is required to maintain the same internal floc DO concentration and subsequent nitrification rate. At this stage, multiple chemical pathways can take place which result in undesirable reactions generating N2O species of which the following 2 are of most concern: autotrophs oxidizing bacteria (AOB) denitrification and hydroxylamine oxidation; where the major causes for AOB denitrification are related to a low dissolved oxygen concentration present in the aerated stage and which leads to a pour nitrification causing high NH4+ concentration. Another pathway where nitrous oxides species are reported to be produced is the hydroxylamine oxidation, where N₂O is caused by a high ammonia load. Denitrification at the same time, is performed by a metabolically very diverse group of microorganisms, which combine oxidation of organic or inorganic substrates to reduction of nitrate, nitrite, NO, N₂O and in ideal conditions. As N₂O is an intermediate in the denitrification process, incomplete denitrification can lead to N2O emission. In this case N2O species are produced when a low ratio between Chemical Oxygen Demand (COD) and biological nitrogen takes place in the denitrification stage due to the limited availability of organic matter. Above all these chemical pathways, N2O formation through AOB denitrification in the aerated stage is reported to be the most significant one. Moreover, this event takes place mainly at the beginning of the nitrification stage when the change from anoxic to aerobic conditions is not quickly achieved. Here the substrate consumes almost immediately the oxygen present in the wastewater resulting in incomplete oxidation pathways and incomplete digestion of the biodegradable substrate. The supply of pure Oxygen in this particular area strongly decreases this phenomenon, allowing a complete oxidation of the species coming from the denitrification zone, therefore decreasing the Nitrous Oxides production and according emissions from the wastewater treatment plant and its equivalent CO2 footprint.

One of the objectives of the present invention is to propose improved conditions of operation of such wastewater treatment processes.

For this purpose, the present invention deals with a process for treating water in a treatment plant, in which a biodegradable material present in the water is biodegraded at least partly by microorganisms, and in which the nitrogen contained in the water is biologically treated by successive stages of nitrification and denitrification, the nitrification step involving the biological oxidation of ammonium (NH₄ ⁺ ) into nitrite (NO₂ ⁻ ) and as the case may be into nitrate (NO₃⁻ ) and being favored in an aerobic environment, whereas denitrification involves the reduction of soluble forms of nitrogen into gaseous compounds, notably into nitric oxide NO, nitrous oxide N₂O and nitrogen N₂, and being favoured by anoxic conditions,
characterized in that :
- an injection of pure oxygen or of a gas mixture comprising oxygen, gas mixture comprising preferentially at least 90% oxygen, is performed into a first part of the nitrification zone, which is a first aerated zone following an anoxic zone, first aerated zone where the concentration of pollutant is considered as the highest towards a given set point value, first part into which a change from anoxic to aerobic conditions is achieved, said injection being performed in order to allow preventing the incomplete oxidation of the nitrogen species coming from the denitrification zone, and therefore decreasing the Nitrous Oxides production, such conditions of oxygen being able to create oxic conditions,
- while it is performed an aeration of the rest of said first aerated zone zone with compressed air or with any other oxygen-containing mixture including pure oxygen.

## Claims

1. A process for treating water in a treatment plant, in which a biodegradable material present in the water is biodegraded at least partly by microorganisms, and in which the nitrogen contained in the water is biologically treated by successive stages of nitrification and denitrification, the nitrification step involving the biological oxidation of ammonium (NH₄ ⁺ ) into nitrite (NO₂ ⁻) and as the case may be into nitrate (NO₃⁻ ) and being favored in an aerobic environment, whereas denitrification involves the reduction of soluble forms of nitrogen into gaseous compounds, notably into nitric oxide NO, nitrous oxide N₂O and nitrogen N₂, and being favoured by anoxic conditions,
**characterized in that** :
- an injection of pure oxygen or of a gas mixture comprising oxygen, gas mixture comprising preferentially at least 90% oxygen, is performed into a first part of the nitrification zone, which is a first aerated zone following an anoxic zone, first aerated zone where the concentration of pollutant is considered as the highest towards a given set point value, first part into which a change from anoxic to aerobic conditions is achieved, said injection being performed in order to allow preventing the incomplete oxidation of the nitrogen species coming from the denitrification zone, and therefore decreasing the Nitrous Oxides production, such conditions of oxygen being able to create oxic conditions,
- while it is performed an aeration of the rest of said first aerated zone zone with compressed air or with any other oxygen-containing mixture including pure oxygen.
